# EUROPÄISCHE PATENTSCHRIFT

(11) **EP 4 228 932 B1**
(45) Veröffentlichungstag und Bekanntmachung des Hinweises auf die Patenterteilung: **28.08.2024**
(21) Anmeldenummer: 21794522.9
(22) Anmeldetag: 15.10.2021
(51) Int. Cl.: B60R 22/18, B60R 22/46

(54) **RÜCKHALTEVORRICHTUNG MIT EINEM SICHERHEITSGURT UND MIT EINEM GURTSTRAFFER**
RESTRAINING DEVICE HAVING A SEATBELT AND HAVING A BELT PRETENSIONER
DISPOSITIF DE RETENUE CONSTITUÉ D'UNE CEINTURE DE SÉCURITÉ ET D'UN PRÉTENSIONNEUR DE CEINTURE

(30) Priorität: 16.10.2020 DE 102020213098
(43) Veröffentlichungstag der Anmeldung: 23.08.2023
(73) Patentinhaber: VOLKSWAGEN AKTIENGESELLSCHAFT, 38440 Wolfsburg (DE)
(72) Erfinder: FEIG, Sebastian, 38448 Wolfsburg (DE); PRZYBYLA, Michael, 38457 Calberlah (DE); PARRER, Jörg, 38448 Wolfsburg (DE)
(86) Internationale Anmeldenummer: PCT/EP2021/078560
(87) Internationale Veröffentlichungsnummer: WO 2022/079219

(56) Entgegenhaltungen:
- DE-A1- 19 737 469
- DE-A1- 19 960 848

## Beschreibung

Die Erfindung betrifft eine Rückhaltevorrichtung für einen Insassen eines Kraftfahrzeugs mit einem Sicherheitsgurt, der in einer Gebrauchsstellung durch ein Gurtschloss in einen als Brustgurt diagonal über den Brustbereich des Insassen verlaufenden oberen Abschnitt des Sicherheitsgurtes und einen als Beckengurt im Hüftbereich des Insassen verlaufenden unteren Abschnitt des Sicherheitsgurts unterteilt ist, und einem Gurtstraffer, durch den in einer kritischen Fahrsituation eine Zugkraft auf den Beckengurt und/oder den Brustgurt übertragbar ist, und einem Führungselement für den Sicherheitsgurt mit einer Einlassöffnung und einer Auslassöffnung, wobei die Breite der Einlassöffnung zumindest der Breite des Sicherheitsgurtes entspricht und die Breite der Auslassöffnung wesentlich geringer ist als die Breite des Sicherheitsgurts, sodass der Sicherheitsgurt auf seiner dem Gurtstraffer zugewandten Seite in einer Längsrichtung des Sicherheitsgurts in seinem Querschnitt gewölbt und/oder zumindest einmal gefaltet ist. Weiterhin betrifft die Erfindung einen Fahrzeugsitz mit einer Rückhaltevorrichtung.

Eine Rückhaltevorrichtung der genannten Art wird in der Praxis eingesetzt, um die unfallbedingte Vorverlagerung des Insassen aus seinem Sitz heraus und damit das Gefährdungsrisiko eines möglichen Aufpralls auf Ausstattungs- oder Karosserieelemente des Kraftfahrzeugs zu verringern. Hierzu sind derartige Rückhaltevorrichtungen mit einem Gurtstraffer ausgestattet, durch den bei einem Unfall bereits vor Eintritt der Vorverlagerung der Sicherheitsgurt gestrafft wird.

Hierzu werden sowohl mechanische Systeme, bei denen beispielsweise die mechanische Verformung im vorderen Karosseriebereich durch Umlenkung von Seilzügen als Gurtstraffer genutzt. Weiterhin sind auch pyrotechnische Systeme bekannt, bei denen eine Treibladung für die erforderliche Gurtstraffung sorgt.

Aus dem Stand der Technik sind auch bereits Gurtstraffer mit einer Kolben-Zylinder-Einheit bekannt, einem Antrieb für die Kolben-Zylinder-Einheit und einem Kraftübertragungsmittel, das mit der Kolben-Zylinder-Einheit und wenigstens im Rückhaltefall mit dem Sicherheitsgurt direkt verbunden ist und die beim Aktivieren des Antriebs in der Kolben-Zylinder-Einheit hervorgerufene Bewegung in eine Verschiebung des Sicherheitsgurts umsetzt. Derartige Gurtstraffersysteme sind auch als sogenannte Linearstraffer bekannt. Sie können als Endbeschlag- oder Schlossstraffer ausgebildet sein.

Die konventionellen, in Fahrzeugen eingesetzten pyrotechnischen Linearstraffer bauen innerhalb einer möglichst kurzen Zeit von 5 - 12 msec in einer Zylinder-Kolben-Einheit eine Kraft von 2 - 2,5 kN auf, mit welcher der Sicherheitsgurt eingezogen wird, um die Gurtlose zu entfernen.

Die DE 197 37 469 C2 beschreibt eine Gurtstraffeinrichtung für Sicherheitsgurte in Kraftfahrzeugen. Das Gurtband wird hierzu in seinem Einlaufbereich in den Gurtaufroller durch einen an dem Gurtaufroller angebrachten Gurtfalttrichter geführt, in dem das Gurtband durch Einschlagen seiner beiden äußeren Längskanten auf das Gurtband unter Verringerung der Gurtbandbreite mehrlagig gefaltet und in gefaltetem Zustand auf der Gurtwelle aufgewickelt wird. Beispielsweise wird durch den Gurtfalttrichter eine äußere Längskante des Gurtbands auf zwei Drittel der Gurtbandbreite eingeschlagen und das verbleibende Drittel der Gurtbandbreite mit der gegenüberliegenden äußeren Längskante unter Überlappung des teilgefalteten Gurtbands durch den Gurtfalttrichter umgeschlagen und aufgefaltet, sodass sich eine dreilagige Aufwicklung des nur noch ein Drittel der Gurtbandbreite betragenden Gurtbands auf der Gurtwelle ergibt. Dadurch soll neben dem beim Straffvorgang überproportional zur Länge des eingezogenen Gurtbands anwachsenden Durchmesser auch eine geringere Baugröße realisiert werden, was dann den Einbau, beispielsweise in einer Rücksitzbank, ermöglicht.

Ferner ist aus der DE 36 24 155 C2 ein Sicherheitsgurt für Fahrzeuge mit Gurtband, Gurtband-Aufrollautomatik und Umlenkbeschlag mit einem Gurtband-Führungsschlitz bekannt. Zur Erzielung einer geringen Breitenabmessung des Gurtbands im Bereich der Mittelsäule zwischen dem Umlenkbeschlag und der Gurtband-Aufrollautomatik wird das Gurtband gefaltet durch den Führungsschlitz geführt. DE19960848A1 offenbart eine Rückhaltevorrichtung gemäß dem Oberbegriff des Anspruchs 1.

Als nachteilig erweist sich in der Praxis der erhebliche Platzbedarf für den Gurtaufroller sowie der konstruktive Aufwand für einen mittels einer Treibladung entlang einer Kurvenbahn beweglichen Kugelkolben. Weiterhin hat sich bei praktischen Versuchen bereits gezeigt, dass eine Wicklung des mehrfach gefalteten Gurtbands einerseits zu einer unerwünscht schnellen Zunahme des Durchmessers der Wicklung und damit der Länge des je Umdrehung eingezogenen Gurtbandes führt. Zudem erfordert das gefaltete Gurtband auch während der Wicklung eine seitliche Führung, da sich anderenfalls die einzelnen Lagen gegeneinander verschieben. Diese Führung erhöht allerdings auftretende Reibungsverluste und kann auch zu einem Verklemmen der Wicklung führen.

Vor diesem Hintergrund liegt der Erfindung die Aufgabe zugrunde, die Betriebssicherheit zu erhöhen und zugleich den verfügbaren Bauraum für die Rückhaltevorrichtung optimal zu nutzen.

Diese Aufgabe wird gelöst mit einer Rückhaltevorrichtung gemäß den Merkmalen des Patentanspruchs 1. Die Unteransprüche betreffen besonders zweckmäßige Weiterbildungen der Erfindung.

Erfindungsgemäß hat also der Gurtstraffer der erfindungsgemäßen Rückhaltevorrichtung ein bewegliches Koppelelement, das in einer zumindest abschnittsweise rohrförmigen Aufnahme translatorisch entlang einer geraden Bewegungsachse mittels einer Treibladung beweglich ist und das unmittelbar oder durch ein Zugmittel mit dem mehrlagig gefalteten, eingeschlagenen oder eingerollten Sicherheitsgurt verbunden ist. Hierdurch wird eine äußerst kompakte Bauform des Gurtstraffers realisiert, welcher aufgrund des vorgeschalteten Führungselements zur Reduzierung der Breite des Sicherheitsgurts eine geringe Breite aufweist, Insbesondere kann also die rohrförmige Aufnahme einen Innendurchmesser bzw. eine maximale lichte Weite aufweisen, die wesentlich geringer bemessen ist als die Gurtbandbreite, beispielsweise weniger als die Hälfe der Breite des Sicherheitsgurts. Hierzu wird der Sicherheitsgurt mittels des Führungselements vorzugsweise beidseitig symmetrisch zu seiner Haupterstreckung eingeschlagen bzw. eingerollt. Dabei kann der Sicherheitsgurt sogar derart eingerollt werden, dass sich eine Wicklung mit mehreren Windungen mit einer Wickelachse parallel zu der Haupterstreckung des Sicherheitsgurts ergibt. Da die so geschaffenen mehreren Lagen desselben Gurtbandabschnitts nicht wie beim Stand der Technik aufgewickelt und dabei aufeinander gepresst werden, sondern mittels des als Kolbenstange oder Drahtseil ausgeführten Zugmittels translatorisch bewegt werden, kommt es auch bei einem mehrfach eingeschlagenen Gurtband nicht zu einem Verklemmen oder einer sonstigen Erhöhung des Reibungswiderstands, sodass neben der so erreichbaren Reduzierung des erforderlichen Bauraums auch die Betriebssicherheit wesentlich erhöht werden kann. Selbstverständlich führt das Einschlagen oder Einrollen des Gurtbands auch nicht zu einer Reduzierung der Bruchlast des Gurtbands, da unerwünschte Knickstellen, wie bei den aus dem Stand der Technik bekannten Gurtstraffeinrichtungen mit Gurtaufroller, bereits prinzipiell aufgrund der translatorischen Bewegung ausgeschlossen sind. Die rohrförmige Aufnahme schließt den Kolben sowie den zu seiner Betätigung vorhandenen Aktuator, beispielsweise ein Zylinder, ebenso wie den Sicherheitsgurt vorzugsweise vollständig ein, um diesen gegenüber Umwelteinflüssen aber auch vor crashbedingten Beschädigungen optimal zu schützen.

Weiterhin kann die Aufnahme problemlos in eine vorhandene Sitzstruktur integriert und gegebenenfalls auch als tragendes Element genutzt werden. Besonders vorteilhaft ist dementsprechend eine Ausführungsform der Erfindung, bei welcher die Aufnahme zugleich ein Strukturelement, beispielsweise ein Sitzquerrohr eines insbesondere beweglichen Fahrzeugsitzes bildet. Dadurch werden einerseits ein geringer räumlicher Abstand des Gurtstraffers von dem Fahrzeuginsassen und damit kurze Übertragungswege erreicht. Andererseits ist der Gurtstraffer gemeinsam mit dem Sitz, beispielsweise zur Einstellung individuell gewünschter Sitzpositionen, in dem Fahrzeuginnenraum beweglich. Die Relativposition zwischen dem Fahrzeuginsassen und dem Gurtstraffer bleibt somit stets unverändert. Darüber hinaus kann dieser auch gemeinsam mit dem Sitz aus dem Kraftfahrzeug entfernt werden bzw. können zur Erweiterung der Transportkapazität entsprechende Sitze mit der erfindungsgemäßen Rückhaltevorrichtung nachträglich ergänzt werden, die dabei höchste Sicherheitsanforderungen erfüllen.

Die Erfindung ist nicht auf solche auch als Linearstraffer bezeichneten Gurtstraffer beschränkt, die aus einem in einem Zylinder beweglichen Kolben bestehen. Vielmehr kann die die Kraft, die auf das translatorisch bewegliche Koppelelement übertragen wird, auch auf andere Weise erzeugt werden, wobei zwischen dem Krafterzeuger und dem Koppelelement beispielsweise auch ein flexibles Zugmittel angeordnet sein kann. Der Gurtstraffer kann daher beispielsweise auch in einer Rücklehne vertikal bzw. gegenüber der Vertikalen geneigt angeordnet sein. Besonders vorteilhaft ist es jedoch, wenn das Koppelelement zumindest im Wesentlichen horizontal beweglich ausgeführt ist.

Das Führungselement kann so geformt sein, dass die Einlassöffnung und die Auslassöffnung in parallelen Ebenen angeordnet sind. Weiterhin kann das Führungselement auch gebogen oder helixförmig gedreht ausgeführt sein, sodass die Ebenen der Einlass- und der Auslassöffnung parallel zueinander sind, jedoch die Hauptachsen der Ebenen der in ihrer Grundform ovalen Einlass- und der Auslassöffnungen nicht parallel verlaufen.

Gemäß einer vorteilhaften Variante schließen die Ebenen der Einlassöffnung und der Auslassöffnung zueinander einen spitzen Winkel ein, sodass in das Führungselement eine Umlenkung für den Sicherheitsgurt integriert ist. Darüber hinaus kann das Führungselement auch um eine beispielsweise horizontale Achse schwenkbeweglich ausgeführt sein, um so eine selbsttätige Ausrichtung der Winkelstellung entsprechend des individuellen Gurtbandverlaufs verschiedener Fahrzeuginsassen zu ermöglichen.

Bei einer besonders praxisnahen Ausgestaltungsform der Erfindung ist mittels des Führungselements der in seiner Breite reduzierte Sicherheitsgurt mittels eines Leitelements in Richtung der Bewegungsachse in die Aufnahme umlenkbar, sodass mittels des beispielsweise mit einer Leitöse versehenen Leitelements die auftretenden Reibungsverluste wesentlich reduziert werden können. Hierzu kann das Leitelement insbesondere eine reibungsmindernde Oberflächenbeschaffenheit aufweisen. Ferner können auch Leitrollen eingesetzt werden.

Weiterhin erweist es sich als besonders vorteilhaft, wenn das Führungselement als ein Blechformteil aus einem einteiligen Blechzuschnitt ausgeführt ist, wobei die Einlassöffnung und die Auslassöffnung durch Teilbereiche des Führungselements verbunden sind. Vorzugsweise ist das Führungselement als ein offenes Formteil derart ausgeführt, dass der Sicherheitsgurt nicht nur durch die Ein- oder Auslassöffnung eingeführt werden kann, sondern auch quer hierzu, wobei eine schlitzförmige, zwischen der Ein- oder Auslassöffnung verlaufende Durchbrechung mit einer zumindest der Materialstärke des Gurtbands entsprechenden Breite ausreichend ist und bevorzugt eingesetzt werden kann.

Weiterhin weist das Führungselement vorzugsweise zumindest im Bereich der Auslassöffnung in einem zumindest einem die Einlassöffnung und die Auslassöffnung verbindenden, dem jeweiligen Seitenrand des Sicherheitsgurts zugewandten Randbereich eine konkav, insbesondere kreisbogenförmig gewölbte Ausformung auf, wobei der Radius des kreisbogenförmig gewölbten Randbereichs beginnend mit der Einlassöffnung bis zu der Auslassöffnung stetig abnimmt. Dadurch erfährt der Sicherheitsgurt randseitig eine im Verlauf des Durchgangs durch das Führungselement zunehmende Auslenkung als Aufbiegung oder Aufwölbung bis schließlich die Seitenkanten des Sicherheitsgurts in einem mittleren Bereich auf die Oberfläche des Sicherheitsgurts treffen.

Besonders bevorzugt umschließt der konkave Randbereich des Führungselements den jeweiligen Seitenrand des Sicherheitsgurts zu mehr als 180°. Dabei kann die Formgebung der Randbereiche des Führungselements beiderseits seiner Längsachse übereinstimmend ausgeführt sein. Darüber hinaus können die Radien der gegenüberliegenden Randbereiche des Führungselements auch derart unterschiedlich bemessen sein, dass die Seitenränder des Sicherheitsgurts einander überlappen, um so noch kompaktere Abmessungen bis hin zu einem in seiner Querrichtung straff eingerollten Sicherheitsgurt mit einer im Querschnitt spiralförmigen Anordnung der Lagen des Gurtbands zu realisieren.

Die Erfindung wird weiterhin noch mit einem Fahrzeugsitz dadurch gelöst, dass der Fahrzeugsitz mit einer solchen Rückhaltevorrichtung ausgestattet ist und der Gurtstraffer in einer zumindest abschnittsweise rohrförmigen Aufnahme angeordnet ist, wobei die Aufnahme als ein zwei gegenüberliegende Sitzseitenteile verbindendes Sitzquerrohr ausgeführt ist. Erfindungsgemäß umfasst der Begriff des Fahrzeugsitzes sowohl Einzelsitze, wie beispielsweise den Fahrersitz, als auch Sitzbänke für mehrere Personen, die auch in der Neigung bzw. in einer liegenden Position einstellbar sein können, die aus dem Kraftfahrzeug entnehmbar oder die lediglich bedarfsweise von einer Nichtgebrauchsposition in eine Gebrauchsposition klappbar sind.

Vorzugsweise ist der Fahrzeugsitz schwenkbar und/oder in Richtung zumindest zweier horizontaler Raumachsen translatorisch beweglich in dem Kraftfahrzeug angeordnet, sodass dieser eine variable Anordnung im Fahrzeuginnenraum, beispielsweise auch mit einer Orientierung entgegen der Fahrtrichtung, gestattet.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: in einer Seitenansicht einen Ausschnitt einer erfindungsgemäßen Rückhaltevorrichtung mit einem Führungselement für den Sicherheitsgurt;
- Fig. 2: eine perspektivische Darstellung der in Figur 1 gezeigten Rückhaltevorrichtung;
- Fig. 3: eine rückwärtige perspektivische Darstellung der in den Figuren 1 und 2 gezeigten Rückhaltevorrichtung mit einem Gurtstraffer.

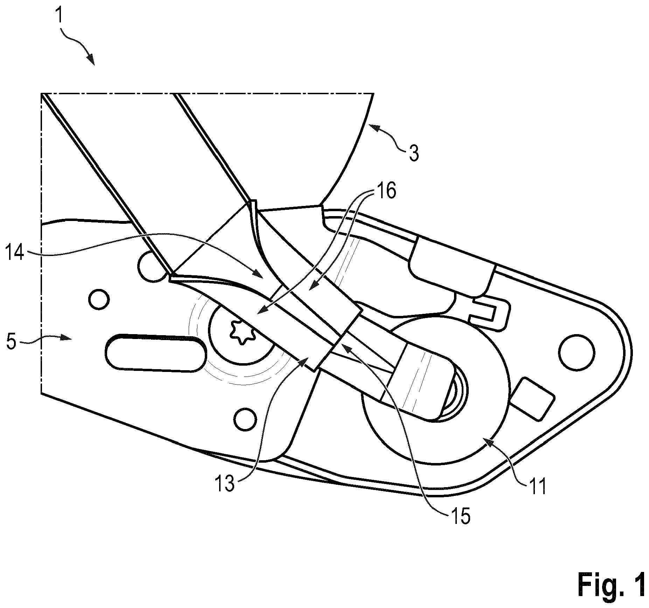

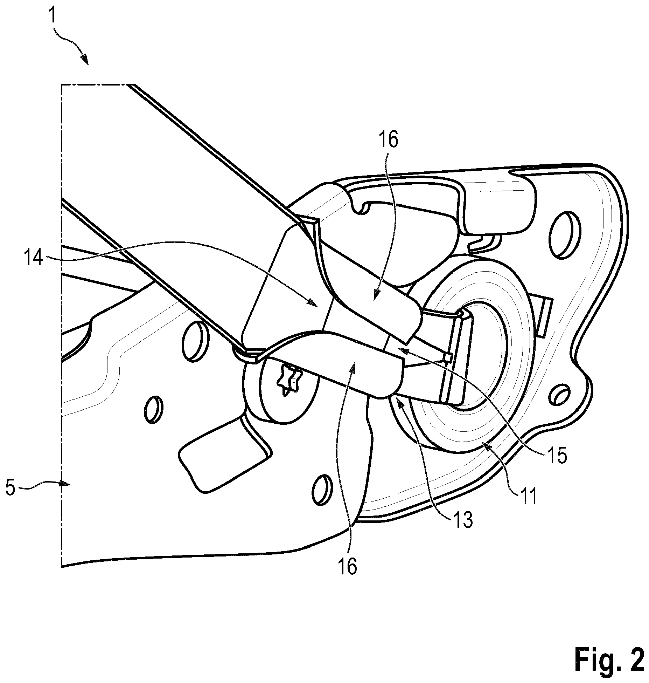

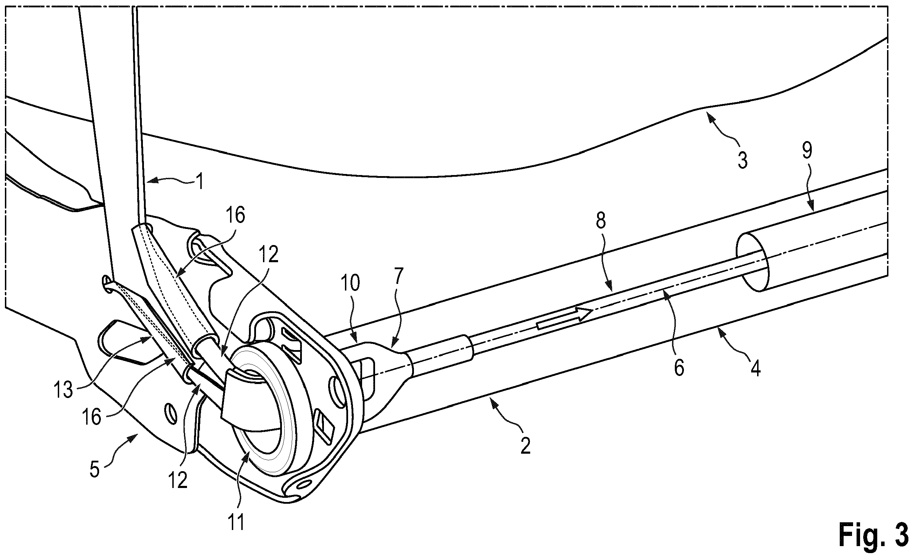

Eine erfindungsgemäße Rückhaltevorrichtung für einen Insassen eines nicht weiter dargestellten Kraftfahrzeugs mit einem Sicherheitsgurt 1, dessen als Beckengurt im Hüftbereich des Insassen verlaufender unterer Abschnitt des Sicherheitsgurts 1 ausschnittsweise dargestellt ist, wird nachstehend anhand der Figuren 1 bis 3 näher erläutert. Die Rückhaltevorrichtung ist auf ihrer einem nicht gezeigten Gurtschloss abgewandten Seite, in der Praxis vorzugsweise die laterale Seite, mit einem Gurtstraffer 2 ausgestattet, durch den in einer kritischen Fahrsituation eine Zugkraft auf den Sicherheitsgurt 1 übertragbar ist, um so eine Gurtbandlose des Sicherheitsgurts 1 zu entfernen bzw. eine Vorspannung entgegen der unerwünschten Vorverlagerung des Insassen zu erzeugen. Ein Fahrzeugsitz 3 ist mit einer rohrförmigen Aufnahme 4 ausgestattet, welche als ein zwei einander gegenüberliegende Sitzseitenteile 5 der Sitzstruktur verbindendes Sitzquerrohr ausgeführt ist und die zugleich den Gurtstraffer 2 in ihrem Innenraum aufnimmt. Der als Linearstraffer ausgeführte Gurtstraffer 2 hat ein mittels einer Treibladung in der rohrförmigen Aufnahme 4 translatorisch entlang einer Bewegungsachse 6 in Pfeilrichtung bewegliches Koppelelement 7 für den Sicherheitsgurt 1, welches mittels eines Zugmittels 8 mit einem Antriebszylinder 9 verbunden ist. Das Koppelelement 7 hat eine ösenförmige Ausformung 10, an welcher eine Gurtbandschlaufe des Sicherheitsgurts 1 unlösbar fixiert ist. Wie zu erkennen, ist der Sicherheitsgurt 1 hierzu im Bereich eines als Einführung dienenden Leitelements 11 durch Einrollen gegenüberliegender Seitenränder 12 des Sicherheitsgurts 1 etwa auf seine halbe Breite reduziert. Um bei einer Auslösung des Gurtstraffers 2 eine definierte Gurtfaltung zu erreichen, ist die Rückhaltevorrichtung mit einem Führungselement 13 für den Sicherheitsgurt 1 ausgestattet, das mit einer Einlassöffnung 14 und einer Auslassöffnung 15 ausgestattet ist. Dabei entspricht die Breite der Einlassöffnung 14 annäherungsweise der Gurtbandbreite, während die Breite der Auslassöffnung 15 wesentlich geringer ist als die Gurtbandbreite, sodass der Sicherheitsgurt 1 auf seiner dem Gurtstraffer 2 zugewandten Seite in einer Längsrichtung des Sicherheitsgurts 1 eine Aufwölbung seines Querschnitts erfährt und/oder zumindest einmal gefaltet wird, wodurch der Sicherheitsgurt 1 dem Gurtstraffer 2 mehrlagig zugeführt wird. Das Führungselement 13 hat hierzu gegenüberliegende, symmetrische Randbereiche 16 mit einer kreisbogenförmig um ca. 180° gebogenen Ausformung, wobei der Radius der Randbereiche 16 in Richtung des Gurtstraffers 2 stetig abnimmt, um so eine zunehmende Umformung des Sicherheitsgurts 1 zu erreichen.

### Bezugszeichenliste

- 1: Sicherheitsgurt
- 2: Gurtstraffer
- 3: Fahrzeugsitz
- 4: Aufnahme
- 5: Sitzseitenteil

- 6: Bewegungsachse
- 7: Koppelelement
- 8: Zugmittel
- 9: Antriebszylinder
- 10: Ausformung

- 11: Leitelement
- 12: Seitenrand
- 13: Führungselement
- 14: Einlassöffnung
- 15: Auslassöffnung

- 16: Randbereich

## Patentansprüche

1. Rückhaltevorrichtung für einen Insassen eines Kraftfahrzeuges mit einem Sicherheitsgurt (1) und einem Gurtstraffer (2), durch den eine Zugkraft auf den Sicherheitsgurt (1) übertragbar ist, und einem Führungselement (13) für den Sicherheitsgurt (1), das mit einer Einlassöffnung (14) und einer Auslassöffnung (15) für den Sicherheitsgurt (1) ausgestattet ist, wobei die Breite der Einlassöffnung (14) zumindest der Breite des Sicherheitsgurts (1) entspricht und die Breite der Auslassöffnung (15) wesentlich geringer als die Breite des Sicherheitsgurts (1) bemessen ist, wobei der Gurtstraffer (2) ein in einer zumindest abschnittsweise rohrförmigen Aufnahme (4) translatorisch entlang einer geraden Bewegungsachse (6) bewegliches, mit dem Sicherheitsgurt (1) verbundenes Koppelelement (7) aufweist, **dadurch gekennzeichnet, dass** der konkave Randbereich (16) des Führungselements (13) den jeweiligen Seitenrand (12) des Sicherheitsgurts (1) zu mehr als 180° umschließt und dass die Breite der Einlassöffnung (14) annäherungsweise der Gurtbandbreite entspricht, während die Breite der Auslassöffnung (15) wesentlich geringer ist als die Gurtbandbreite, sodass der Sicherheitsgurt (1) auf seiner dem Gurtstraffer (2) zugewandten Seite in einer Längsrichtung des Sicherheitsgurts (1) zumindest einmal gefaltet wird, wodurch der Sicherheitsgurt (1) dem Gurtstraffer (2) mehrlagig zugeführt wird.

2. Rückhaltevorrichtung nach Anspruch 1, **dadurch gekennzeichnet, dass** die Aufnahme (4) zugleich ein Strukturelement eines insbesondere beweglichen Fahrzeugsitzes (3) bildet.

3. Rückhaltevorrichtung nach den Ansprüchen 1 oder 2, **dadurch gekennzeichnet, dass** die Aufnahme (4) gemeinsam mit dem Fahrzeugsitz (3) gegenüber der Karosseriestruktur beweglich in dem Kraftfahrzeug angeordnet ist.

4. Rückhaltevorrichtung nach zumindest einem der vorangehenden Ansprüche, **dadurch gekennzeichnet, dass** das Koppelelement (7) zumindest im Wesentlichen horizontal beweglich ausgeführt ist.

5. Rückhaltevorrichtung nach zumindest einem der vorangehenden Ansprüche, **dadurch gekennzeichnet, dass** die Ebene der Einlassöffnung (14) und die Ebene der Auslassöffnung (15) zueinander einen spitzen Winkel einschließen.

6. Rückhaltevorrichtung nach zumindest einem der vorangehenden Ansprüche, **dadurch gekennzeichnet, dass** der mittels des Führungselements (13) in seiner Breite reduzierte Sicherheitsgurt (1) mittels eines Leitelements (11) in Richtung der Bewegungsachse (6) in die Aufnahme (4) umlenkbar ist.

7. Rückhaltevorrichtung nach zumindest einem der vorangehenden Ansprüche, **dadurch gekennzeichnet, dass** das Führungselement (13) als ein Blechformteil aus einem einteiligen Blechzuschnitt ausgeführt ist.

8. Rückhaltevorrichtung nach zumindest einem der vorangehenden Ansprüche, **dadurch gekennzeichnet, dass** das Führungselement (13) zumindest im Bereich der Auslassöffnung (15) in einem zumindest die Einlassöffnung (14) und die Auslassöffnung (15) verbindenden Seitenrand (12) des Sicherheitsgurts (1) zugewandten Randbereich konkav, insbesondere kreisbogenförmig gewölbt, ausgeführt ist.

9. Fahrzeugsitz (3) mit einer Rückhaltevorrichtung nach zumindest einem der vorangehenden Ansprüche.

10. Fahrzeugsitz (3) nach Anspruch 9, **dadurch gekennzeichnet, dass** der Fahrzeugsitz (3) schwenkbar und/oder in Richtung zumindest zweier horizontaler Raumachsen translatorisch beweglich in dem Kraftfahrzeug angeordnet ist.

## Claims

1. Restraint device for an occupant of a motor vehicle, comprising a safety belt (1) and a belt tensioner (2), by means of which a tensile force can be transmitted to the safety belt (1), and a guide element (13) for the safety belt (1), which is equipped with an inlet opening (14) and an outlet opening (15) for the safety belt (1), the width of the inlet opening (14) corresponding at least to the width of the safety belt (1), and the width of the outlet opening (15) being substantially smaller than the width of the safety belt (1), the belt tensioner (2) comprising a coupling element (7) which is connected to the safety belt (1) and is movable in a translational manner along a straight movement axis (6) in a receptacle (4) which is tubular at least in portions, **characterized in that the** concave edge region (16) of the guide element (13) surrounds the relevant side edge (12) of the safety belt (1) over more than 180° and **in that** the width of the inlet opening (14) approximately corresponds to the width of the belt strap, while the width of the outlet opening (15) is substantially smaller than the width of the belt strap, so that the safety belt (1) is folded at least once in a longitudinal direction of the safety belt (1) on its side facing the belt tensioner (2), as a result of which the safety belt (1) is fed to the belt tensioner (2) in multiple layers.

2. Restraint device according to claim 1, **characterized in that** the receptacle (4) simultaneously forms a structural element of an in particular movable vehicle seat (3).

3. Restraint device according to either claim 1 or claim 2,
**characterized in that** the receptacle (4), together with the vehicle seat (3), is arranged in the motor vehicle so as to be movable relative to the body structure.

4. Restraint device according to at least one of the preceding claims,
**characterized in that** the coupling element (7) is designed to be at least substantially horizontally movable.

5. Restraint device according to at least one of the preceding claims,
**characterized in that** the plane of the inlet opening (14) and the plane of the outlet opening (15) enclose an acute angle with each other.

6. Restraint device according to at least one of the preceding claims,
**characterized in that** the safety belt (1), the width of which is reduced by means of the guide element (13), can be deflected into the receptacle (4) in the direction of the movement axis (6) by means of a deflector element (11).

7. Restraint device according to at least one of the preceding claims,
**characterized in that** the guide element (13) is designed as a sheet metal part made of a one-piece sheet metal blank.

8. Restraint device according to at least one of the preceding claims,
**characterized in that** the guide element (13) is designed to be concave, in particular curved in the shape of a circular arc, at least in the region of the outlet opening (15) in an edge region facing the side edge (12) of the safety belt (1) connecting at least the inlet opening (14) and the outlet opening (15).

9. Vehicle seat (3) comprising a restraint device according to at least one of the preceding claims.

10. Vehicle seat (3) according to claim 9, **characterized in that** the vehicle seat (3) is arranged in the motor vehicle so as to be pivotable and/or movable in a translational manner in the direction of at least two horizontal spatial axes.

## Revendications

1. Dispositif de retenue pour un occupant d'un véhicule automobile comportant une ceinture de sécurité (1) et un prétensionneur de ceinture (2), par lequel une force de traction peut être transmise à la ceinture de sécurité (1), et un élément de guidage (13) pour la ceinture de sécurité (1), qui est équipé d'une ouverture d'entrée (14) et d'une ouverture de sortie (15) pour la ceinture de sécurité (1), dans lequel la largeur de l'ouverture d'entrée (14) correspond au moins à la largeur de la ceinture de sécurité (1) et la largeur de l'ouverture de sortie (15) est dimensionnée de manière sensiblement inférieure à la largeur de la ceinture de sécurité (1), dans lequel le prétensionneur de ceinture (2) présente un élément d'accouplement (7) mobile en translation le long d'un axe de déplacement (6) rectiligne dans un logement (4) de forme tubulaire au moins par sections et relié à la ceinture de sécurité (1), **caractérisé en ce que** la zone de bord concave (16) de l'élément de guidage (13) entoure le bord latéral (12) respectif de la ceinture de sécurité (1) sur plus de 180° et **en ce que** la largeur de l'ouverture d'entrée (14) correspond approximativement à la largeur de la sangle de la ceinture, tandis que la largeur de l'ouverture de sortie (15) est nettement inférieure à la largeur de la sangle, de sorte que la ceinture de sécurité (1) est pliée au moins une fois dans une direction longitudinale de la ceinture de sécurité (1) sur son côté tourné vers le prétensionneur de ceinture (2), moyennant quoi la ceinture de sécurité (1) est guidée au prétensionneur de ceinture (2) en plusieurs couches.

2. Dispositif de retenue selon la revendication 1, **caractérisé en ce que** le logement (4) constitue en même temps un élément de structure d'un siège de véhicule (3), en particulier mobile.

3. Dispositif de retenue selon les revendications 1 ou 2,
**caractérisé en ce que** le logement (4) est disposé dans le véhicule automobile de manière mobile par rapport à la structure de la carrosserie, conjointement avec le siège de véhicule (3).

4. Dispositif de retenue selon au moins l'une des revendications précédentes, **caractérisé en ce que** l'élément d'accouplement (7) est réalisé de manière à être mobile au moins sensiblement horizontalement.

5. Dispositif de retenue selon au moins l'une des revendications précédentes, **caractérisé en ce que** le plan de l'ouverture d'entrée (14) et le plan de l'ouverture de sortie (15) forment entre eux un angle aigu.

6. Dispositif de retenue selon au moins l'une des revendications précédentes, **caractérisé en ce que** la ceinture de sécurité (1), dont la largeur est réduite à l'aide de l'élément de guidage (13), peut être déviée à l'aide d'un élément de direction (11) dans la direction de l'axe de déplacement (6) dans le logement (4).

7. Dispositif de retenue selon au moins l'une des revendications précédentes, **caractérisé en ce que** l'élément de guidage (13) est réalisé sous la forme d'une pièce moulée en tôle à partir d'un flan de tôle d'une seule pièce.

8. Dispositif de retenue selon au moins l'une des revendications précédentes, **caractérisé en ce que** l'élément de guidage (13) est réalisé de manière concave, en particulier bombé en forme d'arc de cercle, au moins dans la zone de l'ouverture de sortie (15), dans une zone de bord tournée vers un bord latéral (12) de la ceinture de sécurité (1) reliant au moins l'ouverture d'entrée (14) et l'ouverture de sortie (15).

9. Siège de véhicule (3) comportant un dispositif de retenue selon au moins l'une des revendications précédentes.

10. Siège de véhicule (3) selon la revendication 9, **caractérisé en ce que** le siège de véhicule (3) est disposé de manière à pouvoir pivoter et/ou se déplacer en translation dans le véhicule automobile dans la direction d'au moins deux axes spatiaux horizontaux.
